# EUROPÄISCHE PATENTSCHRIFT

(11) **EP 2 699 458 B1**
(45) Veröffentlichungstag und Bekanntmachung des Hinweises auf die Patenterteilung: **08.11.2017**
(21) Anmeldenummer: 12715939.0
(22) Anmeldetag: 16.04.2012
(51) Int. Cl.: B60T 8/40, B60T 8/44

(54) **BREMSANLAGE FÜR KRAFTFAHRZEUGE SOWIE VERFAHREN ZUM BETRIEB DER BREMSANLAGE**
BRAKE SYSTEM FOR MOTOR VEHICLES AND METHOD FOR OPERATING THE BRAKE SYSTEM
SYSTÈME DE FREINAGE POUR VÉHICULES À MOTEUR AINSI QUE PROCÉDÉ PERMETTANT DE FAIRE FONCTIONNER UN TEL SYSTÈME DE FREINAGE.

(30) Priorität: 19.04.2011 DE 102011007655; 11.04.2012 DE 102012205859
(43) Veröffentlichungstag der Anmeldung: 26.02.2014
(73) Patentinhaber: Continental Teves AG & Co. oHG, 60488 Frankfurt (DE)
(72) Erfinder: FEIGEL, Hans-Jörg, 61191 Rosbach (DE); BILLER, Harald, 65760 Eschborn (DE)
(86) Internationale Anmeldenummer: PCT/EP2012/056867
(87) Internationale Veröffentlichungsnummer: WO 2012/143310

(56) Entgegenhaltungen:
- EP-A2- 0 485 367
- EP-A2- 1 334 893
- WO-A1-00/34097
- WO-A1-2011/029812
- DE-A1- 19 543 582
- DE-A1-102008 010 528
- JP-A- 2010 052 504

## Beschreibung

Die Erfindung betrifft eine Bremsanlage für Kraftfahrzeuge gemäß dem Oberbegriff von Anspruch 1 sowie ein Verfahren zum Betrieb einer solchen Bremsanlage.

Es sind hydraulische Fahrzeugbremsanlagen bekannt, welche als Fremdkraftbremsanlagen ausgebildet sind und neben einem muskelkraftbetätigbaren Hauptbremszylinder, an den Radbremsen hydraulisch angeschlossen sind und der Druck und Volumen zum Betätigen von Radbremsen bereitstellt, eine weitere, elektrisch steuerbare Druck- und Volumenbereitstellungseinrichtung umfassen, die in einer "Brake-by-wire"-Betriebsart die Radbremsen ansteuert. Bei Ausfall der elektrisch steuerbaren Druck- und Volumenbereitstellungseinrichtung erfolgt eine Betätigung der Radbremsen allein durch die Muskelkraft des Fahrzeugführers (unverstärkte Rückfallbetriebsart).

Aus der WO 2011/029812 A1 ist eine elektrohydraulische Bremsanlage mit einem bremspedalbetätigbaren Hauptbremszylinder, einem Wegsimulator und einer Druckbereitstellungseinrichtung bekannt. Die Radbremsen werden in einer "Brake-by-wire"-Betriebsart durch die Druckbereitstellungseinrichtung mit Druck beaufschlagt. In der Rückfallbetriebsart werden die Radbremsen mittels des Bremspedal-betätigbaren Hauptbremszylinders mit dem durch den Fahrer aufgebrachten Druck beaufschlagt. Als nachteilig wird bei der vorbekannten Bremsanlage empfunden, dass bei einem Ausfall der Ansteuerung oder des Antriebs der elektrisch steuerbaren Druckbereitstellungseinrichtung vom Fahrer große Bremspedalkräfte aufgebracht werden müssen, um eine ausreichende Betriebsbremsverzögerung zu erreichen.

In der EP 1 334 893 A2 wird eine Fahrzeugbremsanlage mit einer Betriebsbremsanlage mit einem elektrisch steuerbaren Druckerzeuger und einer Hilfsbremsanlage beschrieben, wobei die Hilfsbremsanlage eine Betätigungseinheit, welche über ein Trennventil an mindestens eine Radbremse angeschlossen ist, und ein Mittel zur Volumenerhöhung, welches der Betätigungseinheit hydraulisch nachgeschaltet ist, umfasst. Weiter ist in der EP 1 334 893 A2 offenbart, das Mittel zur Volumenerhöhung zwischen der Betätigungseinheit und dem Hydroaggregat anzuordnen, wobei das Hydroaggregat die Trennventile, den Druckerzeuger und die Radventile umfasst.

Es ist daher Aufgabe der vorliegenden Erfindung, eine Bremsanlage der eingangs genannten Art dahingehend zu verbessern, dass der Fahrzeugführer trotz Ausfall der Druckbereitstellungseinrichtung eine ausreichende Betriebsbremsverzögerung komfortabel erreichen kann. Dabei soll die Bremsanlage kostengünstig herstellbar und kompakt sein.

Diese Aufgabe wird erfindungsgemäß durch eine Bremsanlage gemäß Anspruch 1 und ein Verfahren gemäß Anspruch 10 gelöst.

Der Erfindung liegt der Gedanke zugrunde, eine zweite elektrisch steuerbare Druckbereitstellungseinrichtung mit zumindest einem Sauganschluss und einem Druckanschluss vorzusehen, deren Sauganschluss mit einem der Druckräume verbunden oder verbindbar ist und deren Druckanschluss mit dem dem Druckraum zugehörigen Bremskreis verbindbar oder verbunden ist. Mit anderen Worten ausgedrückt, ist die zweite Druckbereitstellungseinrichtung in der hydraulischen Verbindung zwischen einem der Druckräume des Hauptbremszylinders und dem dem Druckraum zugehörigen Bremskreis angeordnet.

Die zweite Druckbereitstellungseinrichtung ist hydraulisch zwischen dem Trennventil und dem zugehörigen Bremskreis angeordnet, wobei der Sauganschluss mit dem Ausgangsanschluss (Hauptbremszylinder abgewandter Anschluss) des Trennventils verbunden ist und der Druckanschluss mit den Eingangsanschlüssen der dem Bremskreis zugeordneten Einlassventile verbunden ist.

Die zweite Druckbereitstellungseinrichtung umfasst zumindest zwei, von einem Elektromotor angetriebene hydraulische Pumpen, wobei die Sauganschlüsse der ersten und der zweiten Pumpe jeweils mit dem Ausgangsanschluss eines der Trennventile verbunden sind. Zweikreisige Motor-Pumpen-Aggregate sind als Rückförderpumpen in konventionellen Bremssystemen bekannt und können bei kompakter Baugröße hohe Systemdrücke erzeugen.

Ein Vorteil der Erfindung liegt darin, dass mittels der zweiten Druckbereitstellungseinrichtung eine Verstärkung des vom Fahrzeugführer im Hauptbremszylinder erzeugten Druckes durchführbar ist, so dass der Fahrzeugführer trotz Ausfall der ersten Druckbereitstellungseinrichtung komfortabel, insbesondere ohne große Bremspedalkraft, eine ausreichende Betriebsbremsverzögerung erreichen kann.

Die erste elektronische Steuer- und Regeleinheit ist bevorzugt zur Ansteuerung der elektrisch steuerbaren Druckbereitstellungseinrichtung im Sinne einer Regelung oder Steuerung des von ihr abgegebenen hydraulischen Druckes ausgebildet. Weiterhin werden durch die erste Steuer- und Regeleinheit vorteilhafterweise die Trennventile und Zuschaltventile und das Simulatorfreigabeventil der Bremsanlage geregelt bzw. gesteuert.

Die Bremsanlage umfasst ein Einlassventil und ein Auslassventil pro Radbremse zum Einstellen radindividueller Bremsdrücke. Bevorzugt werde die Bremsdrücke aus den Bremskreisen zugeordneten Bremskreisdrücken abgeleitet, wobei die Einlassventile im nicht angesteuerten Zustand den Bremskreisdruck zu den Radbremsen weiterleiten und im angesteuerten Zustand einen Radbremsdruckaufbau begrenzen oder verhindern, und wobei die Auslassventile im nicht angesteuerten Zustand ein Abströmen von Druckmittel aus den Radbremsen in einen Druckmittelvorratsbehälter verhindern und im angesteuerten Zustand zulassen und kontrollieren, wobei die Einlassventile geschlossen werden, so dass ein Radbremsdruckabbau erfolgt.

Die Einlassventile und Auslassventile werden bevorzugt ebenfalls von der ersten elektronischen Steuer- und Regeleinheit angesteuert.

Das Trennventil ist jeweils in einer hydraulischen Verbindungsleitung zwischen dem Druckraum und dem Bremskreis bzw. der Bremskreisversorgungsleitung angeordnet und ermöglicht so ein wahlweises Verschließen oder Öffnen der hydraulischen Verbindung zwischen Druckraum und Bremskreis. Die Trennventile sind besonders bevorzugt stromlos offen ausgeführt, damit die Bremskreise in einer stromlosen Rückfallbetriebsart hydraulisch mit dem Hauptbremszylinder verbunden sind und so vom Fahrzeugführer mit Druck beaufschlagt werden können.

Das Zuschaltventil ist jeweils in einer hydraulischen Verbindungsleitung zwischen der ersten Druckbereitstellungseinrichtung und dem Bremskreis bzw. der Bremskreisversorgungsleitung angeordnet und ermöglicht so ein wahlweises Öffnen oder Verschließen der hydraulischen Verbindung zwischen erster Druckbereitstellungseinrichtung und Bremskreis. Besonders bevorzugt sind die Zuschaltventile stromlos geschlossen ausgeführt, damit der Bremskreis in einer stromlosen Rückfallbetriebsart hydraulisch von der ersten Druckbereitstellungseinrichtung getrennt ist.

Die Simulationseinrichtung, die in der "Brake-by-wire"-Betriebsart dem Fahrzeugführer das gewohnte Bremspedalgefühl vermittelt, steht mit einem der Druckräume des Hauptbremszylinders in hydraulischer Verbindung. Die Wirkung der Simulationseinrichtung ist mittels des Simulatorfreigabeventils zu- und abschaltbar. In der unverstärkten sowie in der verstärkten Rückfallbetriebsart ist die Simulationseinrichtung vorteilhafterweise abgeschaltet.

Bevorzugt wird die erste elektrisch steuerbare Druckbereitstellungseinrichtung durch eine Zylinder-Kolben-Anordnung gebildet, deren Kolben durch einen elektromechanischen Aktuator betätigbar ist. Ein solcher elektrohydraulischer Aktuator arbeitet besonders dynamisch, sehr leise und verträgt problemlos die für Bremsanlagen erforderlichen Lastwechselzahlen. Die zweite Druckbereitstellungseinrichtung ist in einer hydraulischen Verbindungsleitung zwischen dem Trennventil und dem zugehörigen Bremskreis bzw. für jeden Bremskreis in der hydraulischen Verbindungsleitung zwischen dem Trennventil und dem Bremskreis angeordnet.

Für die mit den Druckräumen verbundenen oder verbindbaren Pumpen ist bevorzugt jeweils ein elektrisch betätigbares Regelventil vorgesehen, welches der Pumpe parallel geschaltet ist. Mittels der Regelventile und gegebenenfalls eines Drehzahlregelung des die Pumpen antreibenden Elektromotors kann der gewünschte, verstärkte Solldruck je Bremskreis eingestellt werden. Besonders bevorzugt sind die Regelventile analog ansteuerbar ausgeführt, so dass der gewünschte Solldruck durch eine Ventilstromregelung einstellbar ist. Bevorzugt ist jedem Regelventil ein Rückschlagventil parallel geschaltet, das unabhängig vom Schaltzustand des Regelventils eine Druckmittelströmung von dem Druckraum des Hauptbremszylinders zu dem Bremskreis ermöglicht. Die Rückschlagventile erlauben einen schnellen Bremsdruckaufbau durch den Fahrzeugführer.

Gemäß einer bevorzugten Weiterbildung der erfindungsgemäßen Bremsanlage umfasst die zweite Druckbereitstellungseinrichtung eine dritten Pumpe, deren Sauganschluss mit einem Druckmittelvorratsbehälter verbunden ist und deren Abgabevolumenstrom mit dem Abgabevolumenstrom einer der anderen Pumpen zusammengeschaltet ist. In dem entsprechenden Bremskreis ist somit neben der Druckverstärkung eine Volumenverstärkung möglich.

Bevorzugt sind die zweite Druckbereitstellungseinrichtung, die Regelventile und die Rückschlagventile in einer eigenständigen Baugruppe angeordnet. Dies ermöglicht kostengünstig eine Herstellung der Bremsanlage wahlweise mit oder ohne Druckverstärkungsoption.

Gemäß einer Weiterbildung der Erfindung umfasst die Bremsanlage eine zweite elektronische Steuer- und Regeleinheit zur Ansteuerung der zweiten Druckbereitstellungseinrichtung und der Regelventile. Vorteilhafterweise ist die zweite elektronische Steuer- und Regeleinheit in die eigenständige Baugruppe integriert.

Um auch bei Ausfall der ersten Steuer- und Regeleinheit einen Fahrerbremswusch erfassen zu können, ist bevorzugt eine Druckerfassungseinrichtung vorgesehen, welche den Druck an einem mit einem Druckraum verbundenen oder verbindbaren Sauganschluss der zweiten Druckbereitstellungseinrichtung erfasst. Besonders bevorzugt ist auch die Druckerfassungseinrichtung in der eigenständigen Baugruppe angeordnet. Die Ausgangssignale der Druckerfassungseinrichtung werden vorteilhafterweise der zweite elektronische Steuer- und Regeleinheit zur Auswertung zugeführt, so dass die eigenständige Baugruppe sowohl eine Erkennung des Fahrerbremswusches als auch eine entsprechende Druckverstärkung mittels der zweiten Druckbereitstellungseinrichtung und der Regelventile durchführen kann.

Gemäß einer bevorzugten Ausführungsform der erfindungsgemäßen Bremsanlage ist die erste elektronische Steuer- und Regeleinheit mit der zweiten elektronischen Steuer- und Regeleinheit über eine Datenleitung verbunden. Die erste Steuer- und Regeleinheit übermittelt über die Datenleitung der zweiten Steuer- und Regeleinheit ein Bestätigungssignal bezüglich der Möglichkeit eines Druckaufbaus oder Druckabbaus mittels der ersten Druckbereitstellungseinrichtung. Im Falle, dass die erste Druckbereitstellungseinrichtung oder deren Ansteuerung fehlerhaft ist oder eine Stromversorgung der ersten Druckbereitstellungseinrichtung oder der Trennventile, der Zuschaltventile oder des Simulatorventils nicht möglich ist, ist es anhand eines ausbleibenden Bestätigungssignal für die zweite Steuer- und Regeleinheit erkennbar, dass gegebenenfalls ein Druckverstärkung mittels der zweiten Druckbereitstellungseinrichtung notwendig ist.

Um bei einem Ausfall des Bordnetzes eine druckverstärkte Rückfallbetriebsart aufrecht erhalten zu können, werden bevorzugt die zweite Druckbereitstellungseinrichtung, die Regelventile, die Druckerfassungseinrichtung und die zweite elektronische Steuer- und Regeleinheit, besonders bevorzugt die eigenständige Baugruppe, von einer eigenständigen elektrische Energiequelle mit Energie versorgt.

Die Bremsanlage umfasst weiterhin bevorzugt zumindest einen Drucksensor zur Erfassung eines Druckes des Hauptbremszylinders und einen Drucksensor zur Erfassung des Druckes der ersten Druckbereitstellungseinrichtung. Weiterhin umfasst die Bremsanlage vorteilhafterweise einen Weg- oder Winkelsensor zur Erfassung einer Lage oder Position der ersten Druckbereitstellungseinrichtung sowie einen Weg- oder Winkelsensor zur Erfassung einer Bremspedalbetätigung. Die Signale der vier genannten Sensoren werden von der ersten elektronischen Steuer- und Regeleinheit verarbeitet.

Die Erfindung betrifft auch ein Verfahren zum Betrieb einer erfindungsgemäßen Bremsanlage. Hierzu wird, vorteilhafterweise wenn kein Druckaufbau oder Druckabbau mittels der ersten Druckbereitstellungseinrichtung durchführbar ist oder wenn eine Fehlfunktion einer der für die "Brake-by-wire"-Betriebsart benötigten Komponenten erkannt wird, z.B. wenn ein Ausfall der ersten elektrisch steuerbaren Druckbereitstellungseinrichtung oder deren Ansteuerung erkannt wird, und der Fahrzeugführer das Bremspedal betätigt, mittels der zweiten elektrisch steuerbaren Druckbereitstellungseinrichtung Druckmittel aus dem Druckraum oder den Druckräumen des Hauptbremszylinders angesaugt und druckverstärkt in den zugehörigen Bremskreis oder die zugehörigen Bremskreise eingespeist.

Zur Erkennung einer Fehlfunktion einer der für die "Brake-by-wire"-Betriebsart benötigten Komponenten gibt die erste Steuer- und Regeleinheit bevorzugt ein Bestätigungssignal an eine zur Ansteuerung der zweiten Druckbereitstellungseinrichtung ausgebildete, zweite Steuer- und Regeleinheit aus, solange ein Druckaufbau oder Druckabbau mittels der ersten Druckbereitstellungseinrichtung durchführbar ist.

Es ist bevorzugt, eine Betätigung des Bremspedals mittels einer Druckerfassungseinrichtung zu erkennen, welche den Druck an einem mit einem Druckraum verbundenen oder verbindbaren Sauganschluss der zweiten Druckbereitstellungseinrichtung erfasst. Das Ausgangssignal der Druckerfassungseinrichtung wird vorteilhafterweise an die zweite Steuer- und Regeleinheit ausgegeben und in der zweiten Steuer- und Regeleinheit ausgewertet. Der zur Bremspedalbetätigung normalerweise verwendete, im Bereich des Bremspedals oder eines Hauptbremszylinderkolbens angeordnete Weg- oder Winkelsensor steht z.B. bei einem Stromausfall des die erste Steuer- und Regeleinheit versorgenden Bordnetzes nicht zur Verfügung, so dass ein unabhängiger Drucksensor vorteilhaft ist. Alternativ oder zusätzlich ist es bevorzugt, dass der Weg- oder Winkelsensor (im Bereich des Bremspedals oder eines Hauptbremszylinderkolbens) zur Erfassung einer Bremspedalbetätigung derart redundant oder doppelt ausgeführt ist, dass der zweiten Steuer- und Regeleinheit auch dann ein Ausgangssignal des Weg- oder Winkelsensors vorliegt, wenn der ersten Steuer- und Regeleinheit kein Ausgangssignal bereitgestellt werden kann.

Gemäß einer bevorzugten Ausführungsform des erfindungsgemäßen Verfahrens ist die zweite Druckbereitstellungseinrichtung als ein Motor-Pumpen-Aggregat ausgeführt und es wird eine Regelung des von dem Motor-Pumpen-Aggregat ausgegebenen Druckmittelstroms mittels einer Drehzahlregelung des Motor-Pumpen-Aggregats oder mittels einer Ventilstromregelung eines einer Pumpe des Motor-Pumpen-Aggregats parallel geschalteten, vorteilhafterweise analog ansteuerbaren, Regelventils durchgeführt.

Weitere bevorzugte Ausführungsformen der Erfindung ergeben sich aus den Unteransprüchen und der nachfolgenden Beschreibung anhand von Figuren.

Es zeigen schematisch
- Fig. 1: ein erstes Ausführungsbeispiel einer erfindungsgemäßen Bremsanlage,
- Fig. 2: ein Verstärkungsmodul gemäß einem zweiten Ausführungsbeispiel einer erfindungsgemäßen Bremsanlage, und
- Fig. 3: ein Verstärkungsmodul gemäß einem dritten Ausführungsbeispiel einer erfindungsgemäßen Bremsanlage.

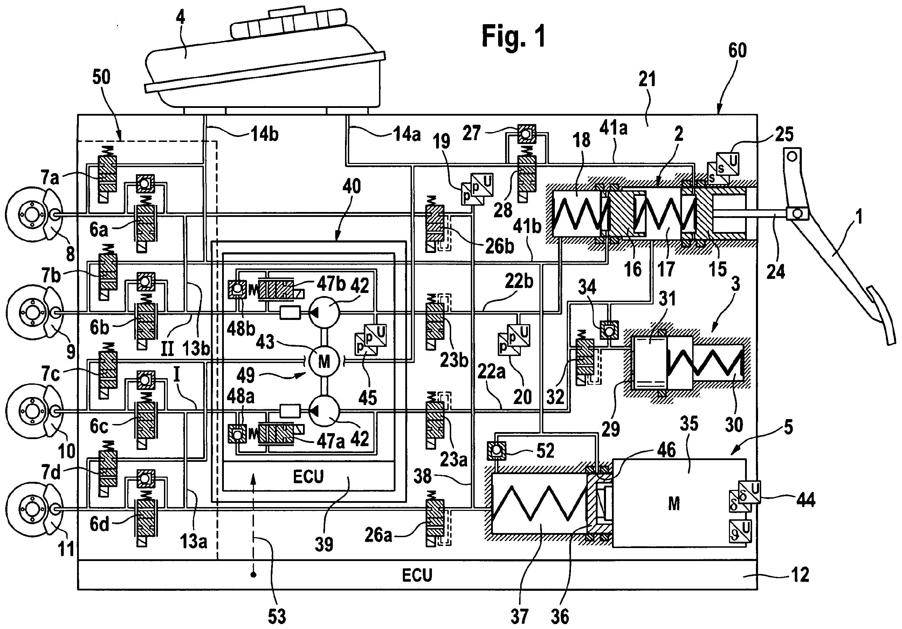

In Fig. 1 ist ein erstes Ausführungsbeispiel einer erfindungsgemäßen Bremsanlage schematisch dargestellt. Die Bremsanlage umfasst im Wesentlichen eine mittels eines Betätigungs- bzw. Bremspedals 1 betätigbare hydraulische Betätigungseinheit 2, einen mit der hydraulischen Betätigungseinheit 2 zusammen wirkenden Wegsimulator bzw. Simulationseinrichtung 3, einen der hydraulischen Betätigungseinheit 2 zugeordneten, unter Atmosphärendruck stehenden Druckmittelvorratsbehälter 4, eine erste elektrisch steuerbare Druckbereitstellungseinrichtung 5, eine zweite elektrisch steuerbare Druckbereitstellungseinrichtung 49, eine elektronische Steuer- und Regeleinheit 12 und eine elektrisch steuerbare Druckmodulationseinrichtung 50.

Druckmodulationseinrichtung 50 umfasst beispielsgemäß je Radbremse 8, 9, 10, 11 eines nicht dargestellten Kraftfahrzeuges ein Einlassventil 6a-6d und ein Auslassventil 7a-7d, die paarweise über Mittenanschlüsse hydraulisch zusammengeschaltet und an die Radbremsen 8, 9, 10, 11 angeschlossen sind. Die Eingangsanschlüsse der Einlassventile 6a-6d werden mittels Bremskreisversorgungsleitungen 13a, 13b mit Drücken versorgt, die in einer "Brake-by-Wire"-Betriebsart aus einem Systemdruck abgeleitet werden, der in einer an einen Druckraum 37 der ersten elektrisch steuerbaren Druckbereitstellungseinrichtung 5 angeschlossenen Systemdruckleitung 38 vorliegt. Den Einlassventilen 6a-6d ist jeweils ein zu den Bremskreisversorgungsleitungen 13a, 13b hin öffnendes, nicht näher bezeichnetes Rückschlagventil parallel geschaltet. In einer unverstärkten Rückfallbetriebsart werden die Bremskreisversorgungsleitungen 13a, 13b über hydraulische Leitungen 22a, 22b mit den Drücken der Druckräume 17, 18 der Betätigungseinheit 2 beaufschlagt. Die Ausgangsanschlüsse der Auslassventile 7a-7d sind paarweise über Rücklaufleitungen 14a, 14b mit dem Druckmittelvorratsbehälter 4 verbunden. Zum Erfassen des in der Systemdruckleitung 38 herrschenden Druckes ist ein vorzugsweise redundant ausgeführter Drucksensor 19 vorgesehen. Beispielsgemäß sind die Radbremsen 8 bzw. 9 dem linken Vorderrad bzw. dem rechten Hinterrad und die Radbremsen 10 bzw. 11 dem linken Hinterrad bzw. dem rechten Vorderrad zugeordnet. Andere Kreisaufteilungen sind ebenso denkbar.

Die Einlass- und Auslassventile 6a-6d, 7a-7d, Teile der Bremskreisversorgungsleitungen 13a, 13b sowie Teile der Rücklaufleitungen 14a, 14b können zu einem eigenständigen elektrohydraulischen Modul zusammen gefasst werden und bilden dann die Druckmodulationseinrichtung 50, die in Fig. 1 stark schematisch durch die gestrichelte Linie angedeutet ist. Druckmodulationseinrichtung 50 umfasst je Bremskreis I, II einen hydraulischen Anschluss zur Verbindung mit der Systemdruckleitung 38, einen hydraulischen Anschluss zur Verbindung mit der Leitung 22a bzw. 22b zur Betätigungseinheit 2 und einen hydraulischen Anschluss zur Verbindung mit der Rücklaufleitung 14a bzw. 14b.

Die hydraulische Betätigungseinheit 2 weist in einem Gehäuse 21 zwei hintereinander angeordnete Kolben 15, 16 auf, die hydraulische Kammern bzw. Druckräume 17, 18 begrenzen, die zusammen mit den Kolben 15, 16 einen zweikreisigen Hauptbremszylinder bzw. einen Tandemhauptzylinder bilden. Die Druckräume 17, 18 stehen einerseits über in den Kolben 15, 16 ausgebildete radiale Bohrungen sowie entsprechende Druckausgleichsleitungen 41a, 41b mit dem Druckmittelvorratsbehälter 4 (über die Rücklaufleitungen 14a, 14b) in Verbindung, wobei diese durch eine Relativbewegung der Kolben 17, 18 im Gehäuse 21 absperrbar sind, und andererseits mittels der hydraulischen Leitungen 22a, 22b mit den bereits genannten Bremskreisversorgungsleitungen 13a, 13b in Verbindung, über die die Druckmodulationseinheit 50 an die Betätigungseinheit 2 angeschlossen ist. Dabei ist in der Druckausgleichsleitung 41a eine Parallelschaltung eines stromlos offenen (SO-) Diagnoseventils 28 mit einem zum Druckmittelvorratsbehälter 4 hin schließenden Rückschlagventil 27 enthalten. Die Druckräume 17, 18 nehmen nicht näher bezeichnete Rückstellfedern auf, die die Kolben 15, 16 bei unbetätigtem Hauptbremszylinder 2 in einer Ausgangslage positionieren. Eine Kolbenstange 24 koppelt die Schwenkbewegung des Bremspedals 1 infolge einer Pedalbetätigung mit der Translationsbewegung des ersten (Hauptzylinder-)Kolbens 15, dessen Betätigungsweg von einem vorzugsweise redundant ausgeführten Wegsensor 25 erfasst wird. Dadurch ist das entsprechende Kolbenwegsignal ein Maß für den Bremspedalbetätigungswinkel. Es repräsentiert einen Bremswunsch eines Fahrzeugführers.

In den an die Druckräume 17, 18 angeschlossenen Leitungsabschnitten 22a, 22b ist je ein Trennventil 23a, 23b angeordnet, welches als je ein elektrisch betätigbares, vorzugsweise stromlos offenes (SO-), 2/2-Wegeventil ausgebildet ist. Durch die Trennventile 23a, 23b kann die hydraulische Verbindung zwischen den Druckräumen 17, 18 und den Bremskreisversorgungsleitungen 13a, 13b bzw. der Druckmodulationseinheit 50 abgesperrt werden. Ein an den Leitungsabschnitt 22b angeschlossener Drucksensor 20 erfasst den im Druckraum 18 durch ein Verschieben des zweiten Kolbens 16 aufgebauten Druck.

Wegsimulator 3 ist hydraulisch an den Hauptbremszylinder 2 angekoppelt und beispielsweise als eine eigenständige Baugruppe ausgebildet, die im Wesentlichen aus einer Simulatorkammer 29, einer Simulatorfederkammer 30 sowie einem die beiden Kammern 29, 30 voneinander trennenden Simulatorkolben 31 besteht. Simulatorkolben 31 stützt sich durch ein in Simulatorfederkammer 30 angeordnetes elastisches Element (z.B. eine Feder), welches vorteilhafterweise vorgespannt ist, am Gehäuse 21 ab. Die Simulatorkammer 29 ist beispielsgemäß mittels eines elektrisch betätigbaren Simulatorfreigabeventils 32 mit dem ersten Druckraum 17 des Tandemhauptbremszylinders 2 verbindbar. Alternativ kann das Simulatorfreigabeventil mechanisch betätigbar ausgeführt sein. Bei Vorgabe einer Pedalkraft und aktiviertem Simulatorfreigabeventil 32 strömt Druckmittel vom Hauptbremszylinder-Druckraum 17 in die Simulatorkammer 29. Ein hydraulisch antiparallel zum Simulatorfreigabeventil 32 angeordnetes Rückschlagventil 34 ermöglicht unabhängig vom Schaltzustand des Simulatorfreigabeventils 32 ein weitgehend ungehindertes Zurückströmen des Druckmittels von der Simulatorkammer 29 zum Hauptbremszylinder-Druckraum 17.

Die erste elektrisch steuerbare Druckbereitstellungseinrichtung 5 ist als eine hydraulische Zylinder-Kolben-Anordnung bzw. ein einkreisiger elektrohydraulischer Aktuator ausgebildet, dessen Kolben 36 von einem schematisch angedeuteten Elektromotor 35 unter Zwischenschaltung eines ebenfalls schematisch dargestellten Rotations-Translationsgetriebes betätigbar ist. Ein der Erfassung der Rotorlage des Elektromotors 35 dienender, lediglich schematisch angedeuteter Rotorlagensensor ist mit dem Bezugszeichen 44 bezeichnet. Zusätzlich kann auch ein Temperatursensor zum Sensieren der Temperatur der Motorwicklung verwendet werden. Der Kolben 36 begrenzt einen Druckraum 37. Zur Abdichtung des Spalts zwischen Kolben 36 und Druckraumwandung dienen zwei Elastomerdichtringen, wobei ein mit dem Druckmittelvorratsbehälter 4 verbundener Anschluss 46 für eine antriebsseitige Benetzung des Druck-tragenden und eine hydraulikseitige Benetzung des medientrennenden Elastomerdichtrings sorgt.

Der durch die Kraftwirkung des Kolbens 36 auf das im Druckraum 37 eingeschlossene Druckmittel erzeugte Aktuatordruck wird in die Systemdruckleitung 38 eingespeist und mit dem Systemdrucksensor 19 erfasst. In der "Brake-by-Wire"-Betriebsart wird die Systemdruckleitung 38 über die Zuschaltventile 26a, 26b mit den Bremskreisversorgungsleitungen 13a, 13b verbunden. Auf diesem Weg erfolgt bei einer Normalbremsung ein Radbremsdruckauf- und -abbau für alle Radbremsen 8, 9, 10, 11. Beim Druckabbau strömt dabei das vorher aus dem Druckraum 37 des Aktuators 5 in die Radbremsen 8, 9, 10, 11 verschobene Druckmittel auf dem gleichen Wege wieder in den Druckraum 37 des Aktuators 5 zurück. Dagegen strömt bei einer Bremsung mit radindividuell unterschiedlich, mit Hilfe der Modulationsventile 6a-6d, 7a-7d geregelten Radbremsdrücken der über die Auslassventile 7a-7d abgelassene Druckmittelanteil in den Druckmittelvorratsbehälter 4. Ein Nachsaugen von Druckmittel in den Druckraum 37 ist durch ein Zurückfahren des Kolbens 36 bei geschlossenen Zuschaltventilen 26a, 26b möglich, indem Druckmittel aus dem Behälter 4 über ein als in Strömungsrichtung zum Aktuator öffnendes Rückschlagventil ausgebildetes Nachsaugventil 52 in den Akuatordruckraum 37 strömen kann.

Weiterhin umfasst die Bremsanlage eine zweite elektronisch steuerbare Druckbereitstellungseinrichtung 49, welche vorteilhafterweise in einem eigenständigen Modul (sog. Verstärkungsmodul) 40 mit einer eigenen elektronischen Steuer- und Regeleinheit 39 ausgeführt ist. Im Falle eines Ausfalls der ersten Druckbereitstellungseinrichtung 5 kann durch Aktivierung der zweiten Druckbereitstellungseinrichtung 49 dennoch die Betriebsverzögerung erreicht werden. Verstärkungsmodul 40 bzw. Druckbereitstellungseinrichtung 49 ist hydraulisch in die Leitungen 22a, 22b zwischen dem Hauptbremszylinder 2 und den Bremskreisversorgungsleitungen 13a, 13b bzw. der Druckmodulationseinrichtung 50 eingefügt. Die Druckbereitstellungseinrichtung 49 saugt also Druckmittel aus den Druckräumen 17, 18 des Hauptbremszylinders 2 an und speist das von ihr abgegebene Druckmittel direkt in die Bremskreisversorgungsleitungen 13a, 13b ein. Druckbereitstellungseinrichtung 5 hingegen speisen das von ihr abgegebene Druckmittel in die Systemdruckleitung 38 ein, welche von den Bremskreisversorgungsleitungen 13a, 13b durch die Zuschaltventile 26a, 26b getrennt bzw. trennbar ist.

Druckbereitstellungseinrichtung 49 umfasst beispielsgemäß zwei von einem Elektromotor 43 gemeinsam angetriebene Pumpen 42. Die Saugseiten der Pumpen 42 sind jeweils mit den ausgangsseitigen Anschlüssen der Trennventile 23a, 23b hydraulisch verbunden, während die Druckseiten der Pumpen 42 mit den Bremskreisversorgungsleitungen 13a, 13b bzw. der Druckmodulationseinrichtung 50, und damit mit den eingangsseitigen Anschlüssen der Einlassventile 6a-6d, hydraulisch verbunden sind.

Das Motor-Pumpen-Aggregat 42, 43 ist vorzugsweise vom Typ einer vom Elektromotor 43 über einen Exzenter angetriebenen Kolbenpumpe 42 ausgebildet, einer Bauform, die in bekannten Bremssystemen als Rückförderpumpe bereits millionenfach eingesetzt wird. Diese kann besonders hohe Systemdrücke erzeugen und kann in sehr kompakter Baugröße realisiert werden.

Verstärkungsmodul 40 umfasst beispielsgemäß neben der elektronischen Steuer- und Regeleinheit 39 und dem Motor-Pumpen-Aggregat 42, 43 einen an einer Saugseite einer Pumpe 42 angeordneten Drucksensor 45, welcher beispielsgemäß in der zum zweiten Druckraum 18 gehörenden Leitung 22b (korrespondierend zu Bremskreis II) angeordnet ist, je ein der Pumpe 42 parallel geschaltetes, vorteilhafterweise analog ansteuerbares Regelventil 47a, 47b, welches insbesondere stromlos offen ausgeführt ist, und ein dem Regelventil 47a, 47b parallel geschaltetes, in Richtung der Radbremsen 8, 9, 10, 11 öffnendes Rückschlagventil 48a, 48b. Rückschlagventil 48a, 48b dient vor allem einem schnellen Bremsdruckaufbau durch den Fahrer. Steuer- und Regeleinheit 39 dient zur Ansteuerung der Regelventile 47a, 47b und des Elektromotors 43 sowie zur Energieversorgung und Signalauswertung des Drucksensors 45.

Die vorhin genannten Komponenten 2, 3, 5, 19, 20, 22a, 22b, 23a, 23b, 25, 26a, 26b, 27, 28, 32, 34, 38, 41a, 41b, 44, 46, 52 können zu einem zweiten elektrohydraulischen Modul zusammen gefasst werden, das mit dem Bezugszeichen 60 versehen ist. Der Ansteuerung der elektrisch betätigbaren Komponenten des Moduls 60, insbesondere der Ventile 23a, 23b, 26a, 26b, 28, 32 und des Elektromotors 35 der ersten Druckbereitstellungseinrichtung 5, dient die elektronische Steuer- und Regeleinheit 12. Steuer- und Regeleinheit 12 ist auch für die Ansteuerung der Druckmodulationseinrichtung 50 ausgelegt. Die Signale der Sensoren 19, 20, 25 und 44 werden ebenso in der elektronische Steuer- und Regeleinheit 12 verarbeitet. Um auch bei einem Ausfall der elektronischen Steuer- und Regeleinheit 12 eine wegbasierte Ansteuerung der zweiten Druckbereitstellungseinrichtung 49 bzw. des Moduls 40 durchführen zu können, ist der Wegsensor 25 vorteilhafterweise auch mit der elektronischen Steuer- und Regeleinheit 39 des Verstärkungsmoduls 40 verbunden und derart, z.B. redundant oder doppelt, ausgeführt, dass Wegsensor 25 auch bei Ausfall der Steuer- und Regeleinheit 12 ein Wegsignal zur Steuerung der zweiten Druckbereitstellungseinrichtung 49 an die Steuer- und Regeleinheit 39 liefern kann.

In einer Normalbremsfunktion der Bremsanlage ("Brake-by-wire"-Betriebsart) ist Hauptbremszylinder 2, und damit der Fahrzeugführer, von den Radbremsen 8, 9, 10, 11 durch die geschlossenen Trennventile 23a, 23b entkoppelt und die Bremskreisversorgungsleitungen 13a, 13b sind über die geöffneten Zuschaltventile 26a, 26b mit der ersten Druckbereitstellungseinrichtung 5 verbunden, welche den Systemdruck zur Betätigung der Radbremsen 8, 9, 10, 11 bereitstellt. Simulationseinrichtung 3 ist durch das geöffnete Simulatorfreigabeventil 32 zugeschaltet, so dass das durch die Betätigung des Bremspedals 1 durch den Fahrer im Hauptbremszylinder 2 verdrängte Druckmittelvolumen durch die Simulationseinrichtung 3 aufgenommen wird und die Simulationseinrichtung 3 dem Fahrzeugführer ein gewohntes Bremspedalgefühl vermittelt.

In einer unverstärkten Rückfallbetriebsart der Bremsanlage, z.B. bei einem Ausfall der elektrischen Energieversorgung der gesamten Bremsanlage (z.B. Module 40, 50 und 60), ist Simulationseinrichtung 3 durch das stromlos geschlossene Simulatorfreigabeventil 32 abgeschaltet und die erste Druckbereitstellungseinrichtung 5 ist durch die stromlos geschlossenen Zuschaltventile 26a, 26b von den Bremskreisversorgungsleitungen 13a, 13b getrennt. Hauptbremszylinder 2 ist über die Leitungen 22a, 22b mit den stromlos offenen Trennventilen 23a, 23b sowie den stromlos offenen Regelventilen 47a, 47b mit den Bremskreisversorgungsleitungen 13a, 13b und damit den Radbremsen 8, 9, 10, 11 verbunden, so dass der Fahrzeugführer durch Betätigung des Bremspedals 1 direkt Druck in den Radbremsen 8, 9, 10, 11 aufbauen kann. In einer verstärkten Rückfallbetriebsart der Bremsanlage (z.B. bei einem Ausfall der Steuer- und Regeleinheit 12, bei einem Ausfall der elektrischen Energieversorgung der Steuer- und Regeleinheit 12 oder des Moduls 60 oder bei einem Defekt der ersten Druckbereitstellungseinrichtung 5) bleiben die Komponenten des Moduls 60 und ggf. auch des Druckmodulationsmoduls 50 stromlos, d.h. die Simulationseinrichtung 3 ist durch das geschlossene Simulatorfreigabeventil 32 abgeschaltet, die erste Druckbereitstellungseinrichtung 5 ist durch die geschlossenen Zuschaltventile 26a, 26b von den Bremskreisversorgungsleitungen 13a, 13b getrennt und der Hauptbremszylinder 2 ist über die offenen Trennventile 23a, 23b mit dem Verstärkungsmodul 40 verbunden. Mittels des Moduls 40 wird dann eine Verstärkung der Fahrerbremsbetätigung durchgeführt und die Radbremsen 8, 9, 10, 11 werden mit einem gegenüber dem vom Fahrer eingesteuerten Druck verstärkten Druck beaufschlagt. Um die Verfügbarkeit der verstärkten Rückfallbetriebsart der Bremsanlage zu erhöhen, wird das Verstärkungsmodul 40 bevorzugt von einer (nicht dargestellten) zweiten elektrischen Energieversorgung versorgt, welche unabhängig von der elektrischen Energieversorgung (z.B. dem Bordnetz) ist, welche das Modul 60 und/oder die Steuer- und Regeleinheit 12 versorgt.

Die Steuer- und Regeleinheit 39 des Moduls 40 ist über zumindest eine Datenleitung mit der zentralen Steuer- und Regeleinheit 12 verbunden. Sind die Steuer- und Regeleinheit 12 sowie das Modul 60 funktionsfähig, d.h. kann ein Druckaufbau mittels der Druckbereitstellungseinrichtung 5 durchgeführt werden, so sendet die Steuer- und Regeleinheit 12 ein positives Bestätigungssignal ("i.O."-Signal) an die Steuer- und Regeleinheit 39. Dies ist in Fig. 1 durch den gestrichelten Pfeil 53 angedeutet. Erhält die Steuer- und Regeleinheit 39 kein positives Bestätigungssignal mehr von der Steuer- und Regeleinheit 12, so geht das Verstärkungsmodul 40 in einen Bereitschaftsmodus über. Findet im Bereitschaftsmodus eine Betätigung des Bremspedals 1 durch den Fahrer statt, so kann dieser Fahrerbremswunsch mittels des Drucksensors 45 des Moduls 40 erkannt werden. Steuer- und Regeleinheit 39 veranlasst dann eine Druckverstärkung des durch den Fahrer eingesteuerten Druckes im Hauptbremszylinder 2 durch geeignete Ansteuerung der zweiten Druckbereitstellungseinrichtung 49 und der Regelventile 47a, 47b. Hierzu können die Regelventile 47a, 47b geschlossen werden und der gewünschte (verstärkte) Solldruck wird durch Drehzahlregelung des Motor-Pumpen-Aggregats 42, 43 eingestellt. Alternativ kann der gewünschte Solldruck in den Bremskreisversorgungsleitung 13a, 13b, und damit den Radbremsen 8, 9, 10, 11, durch Regelung der Ventilströme der analog ansteuerbaren Regelventile 47a, 47b eingestellt werden. Der Solldruck wird bevorzugt anhand des mittels Drucksensor 45 gemessenen Hauptbremszylinderdruckes multipliziert mit einer vorgegeben Notverstärkungsfunktion, z.B. einer linearen Funktion, berechnet. Soll ein Druckabbau durchgeführt werden, so wird die Pumpe 42 abgeschaltet und die Ventilströme der Regelventile 47a, 47b werden entsprechend eingeregelt.

Die beispielsgemäße Bremsanlage der Fig. 1 bietet den Vorteil, dass sie kostengünstig herstellbar ist, da das zusätzliche Verstärkungsmodul 40 wenige Komponenten, insbesondere lediglich zwei ansteuerbare Regelventile 47a, 48b, umfasst. Auch ist das Verstärkungsmodul 40 bei Wunsch rückbaubar. Weiterhin ist es vorteilhaft, dass auf der ersten Druckbereitstellungseinrichtung 5, insbesondere auf dem Getriebe der ersten Druckbereitstellungseinrichtung 5, keine Pumpendruckpulse lasten, da während des Betriebs der Pumpen 42 die Zuschaltventile 26a, 26b geschlossen sind. Da die zweite Druckbereitstellungseinrichtung 49 bzw. das Verstärkungsmodul 40 hydraulisch zwischen dem Hauptbremszylinder 2 und der Druckmodulationseinrichtung 50 angeordnet ist, wird außerdem ein Druckaufbau an den Radbremsen 8, 9, 10, 11 durch die erste Druckbereitstellungseinrichtung 5 in der "Brake-by-wire"-Betriebsart nicht durch Strömungswiederstände zusätzlicher Ventile beeinträchtigt.

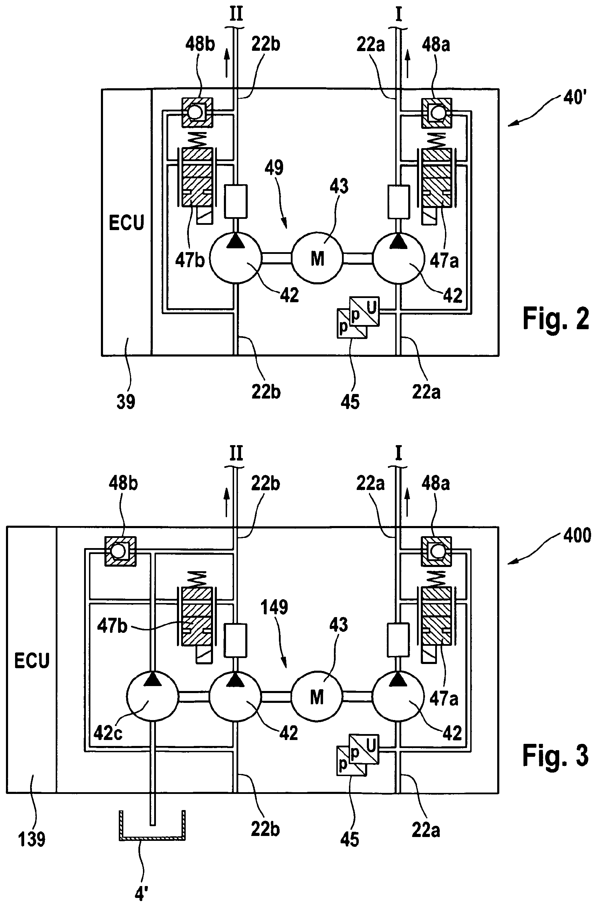

Fig. 2 zeigt in vergrößerter Darstellung ein Verstärkungsmodul gemäß einem zweiten Ausführungsbeispiel einer erfindungsgemäßen Bremsanlage. Verstärkungsmodul 40' entspricht im Wesentlichen dem Verstärkungsmodul 40 des ersten Ausführungsbeispiels. Im Unterschied zum ersten Ausführungsbeispiel ist der Drucksensor 45 an der Saugseite der Pumpe 42 angeordnet, welche mittels Leitung 22a mit dem ersten Druckraum 17 verbunden ist (korrespondierend zu Bremskreis I).

Fig. 3 zeigt ein Verstärkungsmodul gemäß einem dritten Ausführungsbeispiel. Verstärkungsmodul 400 umfasst eine eigenen elektronischen Steuer- und Regeleinheit 139, eine zweite Druckbereitstellungseinrichtung 149, einen Drucksensor 45, elektrisch ansteuerbare Regelventile 47a, 47b und Rückschlagventile 48a, 48b. Druckbereitstellungseinrichtung 149 wird durch ein dreikreisig ausgeführtes Motor-Pumpen-Aggregat 42, 42c, 43 gebildet, wobei zwei der Pumpen 42, der Drucksensor 45 und die Regelventile 47a, 47b, 48a, 48b entsprechend dem zweiten Ausführungsbeispiel der Fig. 2 angeordnet, d.h. in die Leitungen 22a, 22b einfügbar, sind, so dass Druckmittel aus den Druckräumen 17, 18 des Hauptbremszylinders 2 angesaugt und in die Bremskreisversorgungsleitungen 13a, 13b unter verstärktem Druck eingespeist werden kann (sog. Druckverstärkung). Die dritte Pumpe 42c wird zur Förderung zusätzlichen Druckmittelvolumens aus einem Druckmittelvorratsbehälter 4' benutzt (sog. Volumenverstärkung). Hierzu ist die Saugseite der dritten Pumpe 42c mit einem Druckmittelvorratsbehälter 4', z.B. einem Raum des Druckmittelvorratsbehälter 4, verbindbar und die Druckseite ist hydraulisch direkt (radbremsseitig des Rückschlagventils 48a) mit dem Bremskreis II bzw. der Bremskreisversorgungsleitung 13b verbindbar. Steuer- und Regeleinheit 139 dient zur Ansteuerung der Regelventile 47a, 47b und des Elektromotors 43 sowie zur Energieversorgung und Signalauswertung des Drucksensors 45. Ein Vorteil des dritten Ausführungsbeispiels liegt darin, dass durch das Verstärkungsmodul 400 nicht nur geringere Bremspedalkräfte, sondern auch geringere Bremspedalwege in der verstärkten Rückfallebene erzielt werden können.

## Patentansprüche

1. Bremsanlage für Kraftfahrzeuge, die in einer "Brake-by-wire"-Betriebsart sowohl vom Fahrzeugführer als auch unabhängig vom Fahrzeugführer ansteuerbar ist, vorzugsweise in der "Brake-by-wire"-Betriebsart betrieben wird und in mindestens einer Rückfallbetriebsart betrieben werden kann, mit
• einem Hauptbremszylinder (2) mit einem Gehäuse (21) und zwei Kolben (15, 16), die in dem Gehäuse (21) zwei Druckräume (17, 18) begrenzen, an welche jeweils ein Bremskreis (I, II) mit Radbremsen (8, 9, 10, 11) angeschlossen ist,
• einem mit dem Hauptbremszylinder gekoppelten Bremspedal (1) zum Betätigen des Hauptbremszylinders (2),
• einem elektrisch betätigbaren, stromlos offenen Einlassventil (6a-6d) und einem elektrisch betätigbaren, stromlos geschlossenen Auslassventil (7a-7d) je Radbremse zum Einstellen radindividueller Bremsdrücke,
• einem elektrisch betätigbaren, insbesondere stromlos offenen, Trennventil (23a, 23b) je Bremskreis (I, II) zum Trennen des Druckraums (17, 18) von den Eingangsanschlüssen der Einlassventile der Radbremsen des jeweiligen Bremskreises,
• einer ersten elektrisch steuerbaren Druckbereitstellungseinrichtung (5), welche insbesondere durch eine Zylinder-Kolben-Anordnung gebildet wird, deren Kolben (36) durch einen elektromechanischen Aktuator (35) betätigbar ist,
• einem elektrisch betätigbaren, insbesondere stromlos geschlossenen, Zuschaltventil (26a, 26b) je Bremskreis (I, II) zur hydraulischen Verbindung der ersten Druckbereitstellungseinrichtung (5) mit den Eingangsanschlüssen der Einlassventile der Radbremsen des Bremskreises,
• einer Simulationseinrichtung (3), welche in der "Brake-by-wire"-Betriebsart dem Fahrzeugführer ein angenehmes Bremspedalgefühl vermittelt, und
• einer ersten elektronischen Steuer- und Regeleinheit (12) zur Ansteuerung der ersten Druckbereitstellungseinrichtung (5), und insbesondere der Trennventile (23a, 23b) und der Zuschaltventile (26a, 26b),
**dadurch gekennzeichnet, dass** die Simulationseinrichtung mittels eines elektrisch, insbesondere durch die erste elektronisch Steuer- und Regeleinheit (12) angesteuerten, oder mechanisch betätigbaren Simulatorfreigabeventils (32) mit zumindest einem Druckraum (17) des Hauptbremszylinders (2) hydraulisch verbindbar ist, und dass eine zweite elektrisch steuerbare Druckbereitstellungseinrichtung (49, 149) mit zumindest einem Sauganschluss und einem Druckanschluss vorgesehen ist, deren Sauganschluss mit dem Ausgangsanschluss eines der Trennventile (23a, 23b) verbunden ist und deren Druckanschluss mit den Eingangsanschlüssen der zugeordneten Einlassventile verbunden ist, wobei die zweite Druckbereitstellungseinrichtung (49, 149) in einem unbestromten Zustand der Trennventile sowie der Einlass- und Auslassventile Druckmittel aus dem Druckraum ansaugen kann, und wobei die zweite Druckbereitstellungseinrichtung zumindest zwei, von einem Elektromotor (43) angetriebene hydraulische Pumpen (42, 42c) umfasst, wobei die Sauganschlüsse der ersten und der zweiten Pumpe (42) jeweils mit einem der Trennventile (23a, 23b) verbunden sind und die Druckanschlüsse der ersten und der zweiten Pumpe (42) mit den Eingangsanschlüssen der zugeordneten Einlassventile verbunden sind.

2. Bremsanlage nach Anspruch 1, **dadurch gekennzeichnet, dass** für die erste und die zweite Pumpe (42) jeweils ein elektrisch betätigbares, insbesondere analog ansteuerbares, Regelventil (47a, 47b) vorgesehen ist, welches der Pumpe parallel geschaltet ist.

3. Bremsanlage nach Anspruch 2, **dadurch gekennzeichnet, dass** den Regelventilen (47a, 47b) jeweils ein Rückschlagventil (48a, 48b) parallel geschaltet ist, das unabhängig vom Schaltzustand des Regelventils (47a, 47b) eine Druckmittelströmung von dem Druckraum (17, 18) des Hauptbremszylinders (2) zu den Eingangsanschlüssen der zugeordneten Einlassventile ermöglicht.

4. Bremsanlage nach einem der Ansprüche 1 bis 3, **dadurch gekennzeichnet, dass** die zweite Druckbereitstellungseinrichtung (149) eine dritte Pumpe (42c) umfasst, deren Sauganschluss mit einem Druckmittelvorratsbehälter (4, 4') verbunden ist und deren Abgabevolumenstrom mit dem Abgabevolumenstrom einer der anderen Pumpen (42) zusammengeschaltet ist.

5. Bremsanlage nach einem der Ansprüche 1 bis 4, **dadurch gekennzeichnet, dass** eine Druckerfassungseinrichtung (45) vorgesehen ist, welche den Druck an einem mit einem Druckraum (17, 18) verbundenen Sauganschluss der zweiten Druckbereitstellungseinrichtung (49, 149) erfasst.

6. Bremsanlage nach einem der Ansprüche 1 bis 5, wenn rückbezogen auf Anspruch 2, **dadurch gekennzeichnet, dass** eine zweite elektronische Steuer- und Regeleinheit (39, 139) zur Ansteuerung der zweiten Druckbereitstellungseinrichtung (49, 149), und der Regelventile (47a, 47b) vorgesehen ist.

7. Bremsanlage nach Anspruch 6, wenn rückbezogen auf Anspruch 5, **dadurch gekennzeichnet, dass** der zweiten elektronischen Steuer- und Regeleinheit (39, 139) die Ausgangssignale der Druckerfassungseinrichtung (45) zugeführt werden.

8. Bremsanlage nach Anspruch 6 oder 7, wenn rückbezogen auf Anspruch 3 und 5, **dadurch gekennzeichnet, dass** die zweite Druckbereitstellungseinrichtung (49, 149), die Regelventile (47a, 47b) und Rückschlagventile (48a, 48b), die Druckerfassungseinrichtung (45) und die zweite elektronische Steuer- und Regeleinheit (39, 139) in einer eigenständigen Baugruppe (40, 40', 400) angeordnet sind.

9. Bremsanlage nach Anspruch 7, **dadurch gekennzeichnet, dass** die zweite Druckbereitstellungseinrichtung (49, 149), die Regelventile (47a, 47b), die Druckerfassungseinrichtung (45) und die zweite elektronische Steuer- und Regeleinheit (39, 139) von einer eigenständigen elektrische Energiequelle mit Energie versorgt werden.

10. Verfahren zum Betrieb einer Bremsanlage nach einem der Ansprüche 1 bis 9, insbesondere in einem unbestromten Zustand der Trennventile sowie der Einlass- und Auslassventile der Bremsanlage, **dadurch gekennzeichnet, dass** mittels der zweiten elektrisch steuerbaren Druckbereitstellungseinrichtung (49, 149) Druckmittel aus dem Druckraum oder den Druckräumen (17, 18) des Hauptbremszylinders (2) angesaugt und druckverstärkt in den zugehörigen Bremskreis oder die zugehörigen Bremskreise (I, II) eingespeist wird, insbesondere wenn kein Druckauf- oder Druckabbau mittels der ersten Druckbereitstellungseinrichtung (5) durchführbar ist und der Fahrzeugführer das Bremspedal (1) betätigt.

11. Verfahren nach Anspruch 10, wenn abhängig von Anspruch 6, **dadurch gekennzeichnet, dass** die erste Steuer- und Regeleinheit (12) ein Bestätigungssignal (53) an die zur Ansteuerung der zweiten Druckbereitstellungseinrichtung (49, 149) ausgebildete, zweite Steuer- und Regeleinheit (39, 139) ausgibt, solange ein Druckaufbau oder Druckabbau mittels der ersten Druckbereitstellungseinrichtung (5) durchführbar ist.

12. Verfahren nach Anspruch 10 oder 11, wenn abhängig von Anspruch 5, **dadurch gekennzeichnet, dass** eine Betätigung des Bremspedals (1) mittels der Druckerfassungseinrichtung (45) erkannt wird, welche den Druck an dem mit einem Druckraum (17, 18) verbundenen Sauganschluss der zweiten Druckbereitstellungseinrichtung (49, 149) erfasst.

13. Verfahren nach Anspruch 12, wenn abhängig von Anspruch 6, **dadurch gekennzeichnet, dass** die Signale der Druckerfassungseinrichtung (45) an die zweite Steuer- und Regeleinheit (39, 139) ausgegeben und in der zweiten Steuer- und Regeleinheit (39, 139) ausgewertet werden.

14. Verfahren nach einem der Ansprüche 10 bis 13, **dadurch gekennzeichnet, dass** die zweite Druckbereitstellungseinrichtung (49, 149) als ein zumindest zweikreisiges Motor-Pumpen-Aggregat (42, 43) ausgeführt ist und dass eine Regelung des von dem Motor-Pumpen-Aggregat ausgegebenen Druckmittelstroms mittels einer Drehzahlregelung des Motor-Pumpen-Aggregats durchgeführt wird.

15. Verfahren nach einem der Ansprüche 10 bis 13, wenn abhängig von Anspruch 2, **dadurch gekennzeichnet, dass** die zweite Druckbereitstellungseinrichtung (49, 149) als ein zumindest zweikreisiges Motor-Pumpen-Aggregat (42, 43) ausgeführt ist und dass eine Regelung des von dem Motor-Pumpen-Aggregat ausgegebenen Druckmittelstroms mittels einer Ventilstromregelung der den Pumpen (42) des Motor-Pumpen-Aggregats parallel geschalteten, insbesondere analog ansteuerbaren, Regelventile (47a, 47b) durchgeführt wird.

## Claims

1. Brake system for motor vehicles which in a brake-by-wire operating mode can be activated both by the vehicle driver and independently of the vehicle driver, is preferably operated in the brake-by-wire operating mode and can be operated in at least one fallback operating mode, comprising
• a brake master cylinder (2) having a housing (21) and two pistons (15, 16) which delimit in the housing (21) two pressure chambers (17, 18) to each of which a respective brake circuit (I, II) having wheel brakes (8, 9, 10, 11) is connected,
• a brake pedal (1) coupled to the brake master cylinder for actuating the brake master cylinder (2),
• an electrically actuable, currentlessly open inlet valve (6a-6d) and an electrically actuable, currentlessly closed outlet valve (7a-7d) for each wheel brake for setting wheel-individual brake pressures,
• an electrically actuable, in particular currentlessly open, isolation valve (23a, 23b) for each brake circuit (I, II) for isolating the pressure chamber (17, 18) from the inlet connections of the inlet valves of the wheel brakes of the respective brake circuit,
• a first electrically controllable pressure supply unit (5) which is formed, in particular, by a cylinder-piston arrangement the piston (36) of which is actuable by an electromechanical actuator (35),
• an electrically actuable, in particular currentlessly closed, sequence valve (26a, 26b) for each brake circuit (I, II) for hydraulically connecting the first pressure supply unit (5) to the inlet connections of the inlet valves of the wheel brakes of the brake circuit,
• a simulation device (3) which communicates to the vehicle driver an agreeable brake pedal feel in the brake-by-wire operating mode, and
• a first electronic control and regulation unit (12) for activating the first pressure supply unit (5), and in particular the isolation valves (23a, 23b) and the sequence valves (26a, 26b),
**characterized in that** the simulation device is hydraulically connectable by means of an electrically actuable simulator release valve (32), in particular activated by the first electronic control and regulation unit (12), or mechanically actuable simulator release valve (32) to at least one pressure chamber (17) of the brake master cylinder (2), and **in that** a second electrically controllable pressure supply unit (49, 149) having at least one intake port and one pressure port is provided, whereof the intake port is connected to the outlet connection of one of the isolation valves (23a, 23b) and the pressure port is connected to the inlet connections of the associated inlet valves, the second pressure supply unit (49, 149) being able to draw pressure medium from the pressure chamber in an unenergized state of the isolation valves and of the inlet and outlet valves, and wherein the second pressure supply unit includes at least two hydraulic pumps (42, 42c) driven by an electric motor (43), the intake ports of the first and the second pump (42) each being connected to one of the isolation valves (23a, 23b) and the pressure ports of the first and second pump (42) being connected to the inlet connections of the associated inlet valves.

2. Brake system according to Claim 1, **characterized in that** there is provided for the first and second pump (42) a respective control valve (47a, 47b) which is electrically actuable, in particular activatable by analog means, and is connected in parallel to the pump.

3. Brake system according to Claim 2, **characterized in that** a respective non-return valve (48a, 48b) is connected in parallel to each of the control valves (47a, 47b) and enables pressure medium to flow from the pressure chamber (17, 18) of the brake master cylinder (2) to the inlet connections of the associated inlet valves independently of the switching state of the control valve (47a, 47b).

4. Brake system according to any one of Claims 1 to 3, **characterized in that** the second pressure supply unit (149) includes a third pump (42c), the intake port of which is connected to a pressure medium reservoir (4, 4') and the discharge volume flow of which is interconnected with the discharge volume flow of one of the other pumps (42).

5. Brake system according to any one of Claims 1 to 4, **characterized in that** there is provided a pressure detection device (45) which detects the pressure at an intake port of the second pressure supply unit (49, 149) which is connected to a pressure chamber (17, 18).

6. Brake system according to any one of Claims 1 to 5, where it refers back to Claim 2, **characterized in that** a second electronic control and regulation unit (39, 139) for activating the second pressure supply unit (49, 149), and the control valves (47a, 47b), is provided.

7. Brake system according to Claim 6, where it refers back to Claim 5, **characterized in that** the output signals of the pressure detection device (45) are supplied to the second electronic control and regulation unit (39, 139).

8. Brake system according to Claim 6 or 7, where they refer back to Claims 3 and 5, **characterized in that** the second pressure supply unit (49, 149), the control valves (47a, 47b) and non-return valves (48a, 48b), the pressure detection device (45) and the second electronic control and regulation unit (39, 139) are arranged in an independent assembly (40, 40', 400).

9. Brake system according to Claim 7, **characterized in that** the second pressure supply unit (49, 149), the control valves (47a, 47b), the pressure detection device (45) and the second electronic control and regulation unit (39, 139) are supplied with energy by an independent electrical energy source.

10. Method for operating a brake system according to any one of Claims 1 to 9, in particular in an unenergized state of the isolation valves and of the inlet and outlet valves of the brake system, **characterized in that** by means of the second electrically controllable pressure supply unit (49, 149) pressure medium is drawn from the pressure chamber or the pressure chambers (17, 18) of the brake master cylinder (2) and fed in a pressure-boosted manner into the associated brake circuit or the associated brake circuits (I, II), in particular if a pressure build-up or pressure reduction cannot be carried out by means of the first pressure supply unit (5) and the vehicle driver actuates the brake pedal (1).

11. Method according to Claim 10, where dependent on Claim 6, **characterized in that** the first control and regulation unit (12) outputs a confirmation signal (53) to the second control and regulation unit (39, 139) which is configured to activate the second pressure supply unit (49, 149), for as long as pressure can be built up or reduced by means of the first pressure supply unit (5).

12. Method according to Claim 10 or 11, where dependent on Claim 5, **characterized in that** an actuation of the brake pedal (1) is recognized by means of a pressure detection device (45) which detects the pressure at the intake port of the second pressure supply unit (49, 149), which intake port is connected to a pressure chamber (17, 18).

13. Method according to Claim 12, where dependent on Claim 6, **characterized in that** the signals of the pressure detection device (45) are outputted to the second control and regulation unit (39, 139) and are evaluated in the second control and regulation unit (39, 139).

14. Method according to any one of Claims 10 to 13, **characterized in that** the second pressure supply unit (49, 149) is in the form of an at least dual-circuit motor-pump unit (42, 43) and **in that** control of the pressure medium flow emitted by the motor-pump unit is carried out by means of speed control of the motor-pump unit.

15. Method according to any one of Claims 10 to 13, where dependent on Claim 2, **characterized in that** the second pressure supply unit (49, 149) is in the form of an at least dual-circuit motor-pump unit (42, 43) and **in that** control of the pressure medium flow emitted by the motor-pump unit is carried out by means of valve flow control of the control valves (47a, 47b), activatable in particular by analog means, which are connected in parallel to the pumps (42) of the motor-pump unit.

## Revendications

1. Installation de freinage pour véhicules automobiles, qui peut être commandée par un conducteur du véhicule ainsi qu'indépendamment du conducteur du véhicule dans un mode de fonctionnement à commande électronique "brake-by-wire", de préférence qui fonctionne dans le mode de fonctionnement "brake-by-wire" et qui peut fonctionner dans au moins un mode de fonctionnement de retour, comprenant
- un cylindre de frein principal (2) avec un boîtier (21) et deux pistons (15, 16) qui délimitent dans le boîtier (21) deux espaces de pression (17, 18) auxquels se raccorde à chaque fois un circuit de freinage (I, II) avec des freins de roue (8, 9, 10, 11),
- une pédale de frein (1) accouplée au cylindre de frein principal pour actionner le cylindre de frein principal (2),
- une soupape d'entrée (6a-6d) pouvant être commandée électriquement, ouverte en l'absence de courant, et une soupape de sortie (7a-7d) pouvant être commandée électriquement, fermée en l'absence de courant, pour chaque frein de roue, pour ajuster des pressions de freinage individuelles pour chaque roue,
- une soupape de séparation (23a, 23b), pouvant être commandée électriquement, en particulier ouverte en l'absence de courant, pour chaque circuit de freinage (I, II) pour séparer l'espace de pression (17, 18) des raccords d'entrée des soupapes d'entrée des freins de roue du circuit de freinage respectif,
- un premier dispositif de fourniture de pression pouvant être commandé électriquement (5), qui est notamment formé par un agencement cylindre-piston, dont le piston (36) peut être actionné par un actionneur électromécanique (35),
- une soupape de mise en circuit (26a, 26b) pouvant être commandée électriquement, en particulier fermée en l'absence de courant, pour chaque circuit de freinage (I, II), pour la liaison hydraulique du premier dispositif de fourniture de pression (5) aux raccords d'entrée des soupapes d'entrée des freins de roue du circuit de freinage,
- un dispositif de simulation (3) qui donne au conducteur du véhicule une sensation de pédale de frein agréable en mode de fonctionnement "brake-by-wire", et
- une première unité de commande et de régulation électronique (12) pour la commande du premier dispositif de fourniture de pression (5), et en particulier des soupapes de séparation (23a, 23b) et des soupapes de mise en circuit (26a, 26b),
**caractérisée en ce que** le dispositif de simulation peut être connecté hydrauliquement au moyen d'une soupape de libération de simulateur (32) commandée électriquement, en particulier par la première unité de commande et de régulation électronique (12) ou pouvant être actionnée mécaniquement, à au moins un espace de pression (17) du cylindre de frein principal (2), et **en ce qu'**il est prévu un deuxième dispositif de fourniture de pression commandé électriquement (49, 149) avec au moins un raccord d'aspiration et un raccord de pression, dont le raccord d'aspiration est connecté au raccord de sortie de l'une des soupapes de séparation (23a, 23b) et dont le raccord de pression est connecté aux raccords d'entrée des soupapes d'admission associées, le deuxième dispositif de fourniture de pression (49, 149), dans un état non alimenté en courant des soupapes de séparation ainsi que des soupapes d'entrée et de sortie, pouvant aspirer du fluide sous pression hors de l'espace de pression, et le deuxième dispositif de fourniture de pression comprenant au moins deux pompes hydrauliques (42, 42c) entraînées par un moteur électrique (43), les raccords d'aspiration de la première et de la deuxième pompe (42) étant à chaque fois connectés à l'une des soupapes de séparation (23a, 23b) et les raccords de pression de la première et de la deuxième pompe (42) étant connectés aux raccords d'entrée des soupapes d'entrée associées.

2. Installation de freinage selon la revendication 1, **caractérisée en ce que** pour la première et la deuxième pompe (42) est à chaque fois prévue une soupape de régulation (47a, 47b) pouvant être actionnée électriquement, en particulier pouvant être commandée de manière analogique, qui est branchée en parallèle avec la pompe.

3. Installation de freinage selon la revendication 2, **caractérisée en ce qu'**un clapet antiretour (48a, 48b) est à chaque fois branché en parallèle avec les soupapes de régulation (47a, 47b), lequel permet, indépendamment de l'état de commutation de la soupape de régulation (47a, 47b), un écoulement de fluide sous pression depuis l'espace de pression (17, 18) du cylindre de frein principal (2) vers les raccords d'entrée des soupapes d'entrée associées.

4. Installation de freinage selon l'une quelconque des revendications 1 à 3, **caractérisée en ce que** le deuxième dispositif de fourniture de pression (149) comprend une troisième pompe (42c) dont le raccord d'aspiration est connecté à un réservoir de fluide sous pression (4, 4') et dont le débit volumique de distribution est interconnecté au débit volumique de distribution de l'une des autres pompes (42).

5. Installation de freinage selon l'une quelconque des revendications 1 à 4, **caractérisée en ce qu'**un dispositif de détection de pression (45) est prévu, lequel détecte la pression au niveau d'un raccord d'aspiration du deuxième dispositif de fourniture de pression (49, 149) connecté à un espace de pression (17, 18).

6. Installation de freinage selon l'une quelconque des revendications 1 à 5 lorsqu'elles se rapportent à la revendication 2, **caractérisée en ce qu'**il est prévu une deuxième unité de commande et de régulation électronique (39, 139) pour commander le deuxième dispositif de fourniture de pression (49, 149) et les soupapes de régulation (47a, 47b).

7. Installation de freinage selon la revendication 6, lorsqu'elle se rapporte à la revendication 5, **caractérisée en ce que** les signaux de sortie du dispositif de détection de pression (45) sont acheminés à la deuxième unité de commande et de régulation électronique (39, 139).

8. Installation de freinage selon la revendication 6 ou 7, lorsqu'elles se rapportent aux revendications 3 et 5, **caractérisée en ce que** le deuxième dispositif de fourniture de pression (49, 149), les soupapes de régulation (47a, 47b) et les clapets antiretour (48a, 48b), le dispositif de détection de pression (45) et la deuxième unité de commande et de régulation électronique (39, 139) sont disposés dans un module autonome (40, 40', 400).

9. Installation de freinage selon la revendication 7, **caractérisée en ce que** le deuxième dispositif de fourniture de pression (49, 149), les soupapes de régulation (47a, 47b), le dispositif de détection de pression (45) et la deuxième unité de commande et de régulation électronique (39, 139) sont alimentés en énergie à partir d'une source d'énergie électrique autonome.

10. Procédé pour faire fonctionner une installation de freinage selon l'une quelconque des revendications 1 à 9, en particulier dans un état non alimenté en courant des soupapes de séparation ainsi que des soupapes d'entrée et de sortie de l'installation de freinage, **caractérisé en ce que** du fluide sous pression, au moyen du deuxième dispositif de fourniture de pression (49, 149) pouvant être commandé électriquement, est aspiré hors de l'espace de pression ou des espaces de pression (17, 18) du cylindre de freinage principal (2) et est injecté avec une pression amplifiée dans le circuit de freinage associé ou les circuits de freinage associés (I, II), en particulier lorsque qu'aucune augmentation ou diminution de pression ne peut être réalisée au moyen du premier dispositif de fourniture de pression (5) et que le conducteur du véhicule actionne la pédale de frein (1).

11. Procédé selon la revendication 10, lorsqu'elle dépend de la revendication 6, **caractérisé en ce que** la première unité de commande et de régulation (12) émet un signal de confirmation (53) à la deuxième unité de commande et de régulation (39, 139) réalisée pour commander le deuxième dispositif de fourniture de pression (49, 149), tant qu'une augmentation de pression ou une diminution de pression peut être effectuée au moyen du premier dispositif de fourniture de pression (5).

12. Procédé selon la revendication 10 ou 11 lorsqu'elles dépendent de la revendication 5, **caractérisé en ce qu'**un actionnement de la pédale de frein (1) est détecté au moyen du dispositif de détection de pression (45) qui détecte la pression au niveau du raccord d'aspiration, connecté à un espace de pression (17, 18), du deuxième dispositif de fourniture de pression (49, 149).

13. Procédé selon la revendication 12 lorsqu'elle dépend de la revendication 6, **caractérisé en ce que** les signaux du dispositif de détection de pression (45) sont émis au niveau de la deuxième unité de commande et de régulation (39, 139) et sont analysés dans la deuxième unité de commande et de régulation (39, 139).

14. Procédé selon l'une quelconque des revendications 10 à 13, **caractérisé en ce que** le deuxième dispositif de fourniture de pression (49, 149) est réalisé sous forme de d'unité moteur-pompe à au moins deux circuits (42, 43) et **en ce qu'**une régulation du débit de fluide sous pression émis par l'unité moteur-pompe est effectuée au moyen d'une régulation du régime de l'unité moteur-pompe.

15. Procédé selon l'une quelconque des revendications 10 à 13 lorsqu'elles dépendent de la revendication 2, **caractérisé en ce que** le deuxième dispositif de fourniture de pression (49, 149) est réalisé sous forme d'unité moteur-pompe à au moins deux circuits (42, 43) et **en ce qu'**une régulation du débit de fluide sous pression émis par l'unité moteur-pompe est effectuée au moyen d'une régulation du débit de soupape des soupapes de régulation (47a, 47b) montées en parallèle avec les pompes (42) de l'unité moteur-pompe, en particulier pouvant être commandées de manière analogique.
